# EUROPEAN PATENT APPLICATION

(11) **EP 1 403 809 A1**
(43) Date of publication of application: **31.03.2004**
(21) Application number: 03290479.9
(22) Date of filing: 28.02.2003
(51) Int. Cl.: G06K 7/00, G06K 19/07

(54) **Smart card accepting device**

(30) Priority: 26.09.2002 EP 02292379; 25.10.2002 EP 02292668; 07.10.2002 EP 02292463
(71) Applicant: SCHLUMBERGER Systèmes, 92120 Montrouge (FR)
(72) Inventor: Joffray, Olivier, c/o Schlumberger Systèmes, 92542 Montrouge cedex (FR); Barbe, Serge, c/o Schlumberger Systèmes, 92542 Montrouge cedex (FR)

(57) **Abstract**

A portable system (SC), in particular a smartcard, including a microcontroller and means (C1-C8) for communicating with a portable system accepting device (DEV) able to receive at least one portable system, said device comprising hardware elements (VCC,GND), characterized in that said microcontroller stores a program for piloting, or communicating with, said device or with any other system connected to said device if said device accepts more than one portable system.

## Description

### Technical field

- The invention deals with smartcard-accepting devices particularly smart card readers. The invention also concerns the portable system, such as a smart card, coupled to the device. This invention not only applies to smart cards but to all portable systems embedding a microcontroller and able to be coupled to a device as defined herein.
- The device according to the invention can be used for example as an exchanging device:
   □ In any application involving a communication between several smartcards, where smartcards have to exchange data by way of the reader;
      ■ For example, any application requiring two smart cards to interact, either by copying files, applets or by performing calculation; or for example, a device is dedicated to the copy of files, and other data, from a SIM card to another. This allows, for instance, users to keep their phone book when they change their SIM.
      ■ Or a service provider might want to install a new java applet in the smart card of its client. This would be possible by sending him a dual slot device and a card containing the applet to install. The user would have to insert the 2 smart cards in the device to have the new applet installed in its device.
   □ Or in any application involving one or several smart cards embedding an application requiring interacting with the user (consulting device). The invention will be illustrated by way of a smart card application requiring the user to interact with it: For instance, users want to be able to check the money left in their E-purse, or to check the rights they have on their health card. This is also valid for transport applications where users want to check their rights, and the tickets they have already bought.

In the following description, we will use a smart card reader for illustrating the invention.

### Prior Art

Today, smart card readers are built around a micro controller embedding the IS07816-3 protocol, and a specific application.

The big problem is that a micro controller is very expensive. Consequently, the reader is expensive.

For example, consulting devices are built around a micro controller embedding the ISO7816-3 protocol, and a specific application. Those devices are personalized to the smart card function. They send APDU to the smart card to read their content. From the result of the reading, they display a message to inform the user. In many cases, there is a consulting device for each smart card application (e-purse1, e-purse2 ... e-purse x, heath card1 ... heath card x, transport application x...). A button is usually available to shift to the next message for consulting the history of transactions for instance.

Consequently, we meet the following disadvantages:
- such device embeds a micro controller that is one of the most expensive parts of such a device.
- There should be new software
   o for each type of smart cards couple participating to copy in the case of exchanging device, and
   o and for each application, to change the display (For such applications, a new LCD is create per application, as it is less expensive than embedding a "universal" LCD), in the case of consulting device.
- This also means important costs.

### Summary of the invention

The invention deals with a portable system, in particular a smartcard, including a microcontroller and means (C1-C8) for communicating with a portable system accepting device able to receive at least one portable system, said device comprising hardware elements (VCC,GND); according to the invention, the microcontroller stores a program for piloting, or communicating with, said device or with any other system connected to said device if said device accepts more than one portable system. The invention also deals with a portable system-accepting device comprising hardware elements (VPP,VCC,GND,RST) and able to receive at least one portable system as defined above, characterized in that hardware elements are piloted by the program stored inside the portable system's microcontroller.

The idea is to remove the micro controller from such reader in order to reduce the costs.

Instead of embedding in the reader a micro controller able to use ISO 7816-x protocols to read the smart card content, the invention proposes to use the smart card itself, which is in fact a micro controller.

Consequently, all the intelligence is removed from the reader.

### Embodiments illustrating the invention

The invention will be illustrated with 2 embodiments A and B.

### EMBODIMENT A

Figures 1 to 6 concern a first example illustrating the invention.
Figure 1 illustrates a Smart card communication means (ISO 7816 standard);
Figure 2 illustrates a Smart card Reader allowing transferring the content of a Smart card to another smart card.
Figure 3 is a table illustrating a dialogue between a smart card and a reader.
Figure 4 a first example illustrating the first embodiment A.
Figures 5 to 7 are a 2^{nd} example illustrating the first embodiment A.
Figure 8 is a 3^{rd} example illustrating the first embodiment A.

Generally, readers are personalized to the smart card function. Readers send APDU to the smart card to read their content. For example, From the result of the reading, they display a message to inform the user.

Currently, the only way to have two smart cards exchanging data is introducing them in a dual slot smart card reader able to understand both of them.

The smart card / reader interaction means:

Today, A smart card reader SC should be able, at least, to understand the T=0 protocol as defined in the ISO 7816-3 standard.

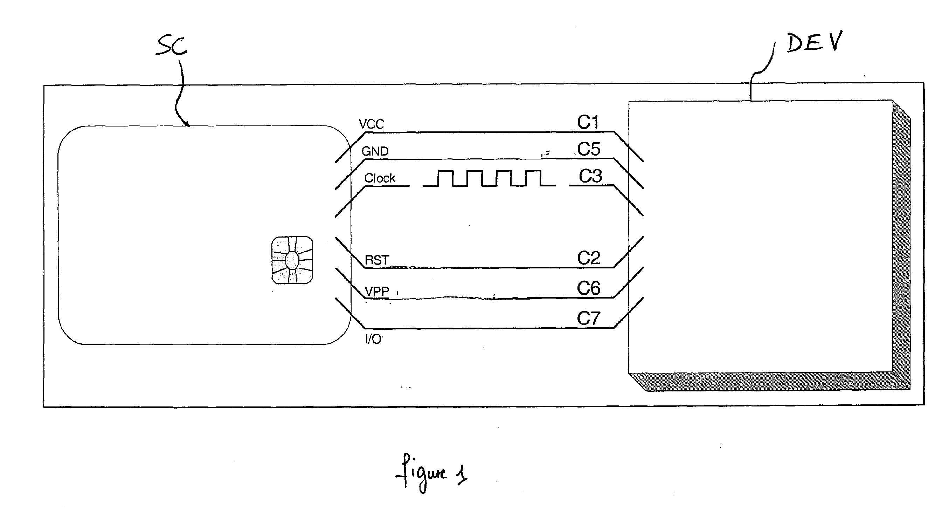

The smart cards and the associated readers DEV are electrically connected through 8 contacts C1 to C8. Two of them are defined as RFU in the standard (see figure 1).
C1: power supply VCC
C2: Ground GND (reference voltage)
C3: Clock
C4: Reset signal (RST)
C6: Programming power input
C7: Input or output I/O for serial data.

Except the I/O (C7) used by the smart card when it wants to send data to the reader, all other electrical connections are under the exclusive control of the smart card reader, which provide them, or not, to the smart card.

T=0 protocol, and several others ISO 7816-x requirements, is difficult to implement, and requires a micro controller in the smart card reader.

### The smart card / reader communication organization:

Today, during their exchanges, the smart card and the reader have specific roles:
- The reader is the master of the communication.
- The smart card is the slave.

The reader initiates and ends the communication with the smart card.

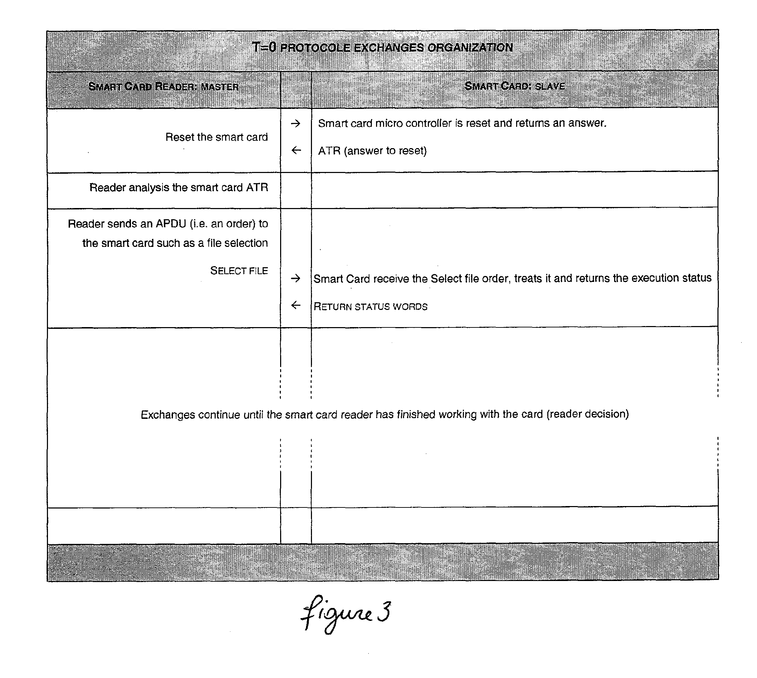

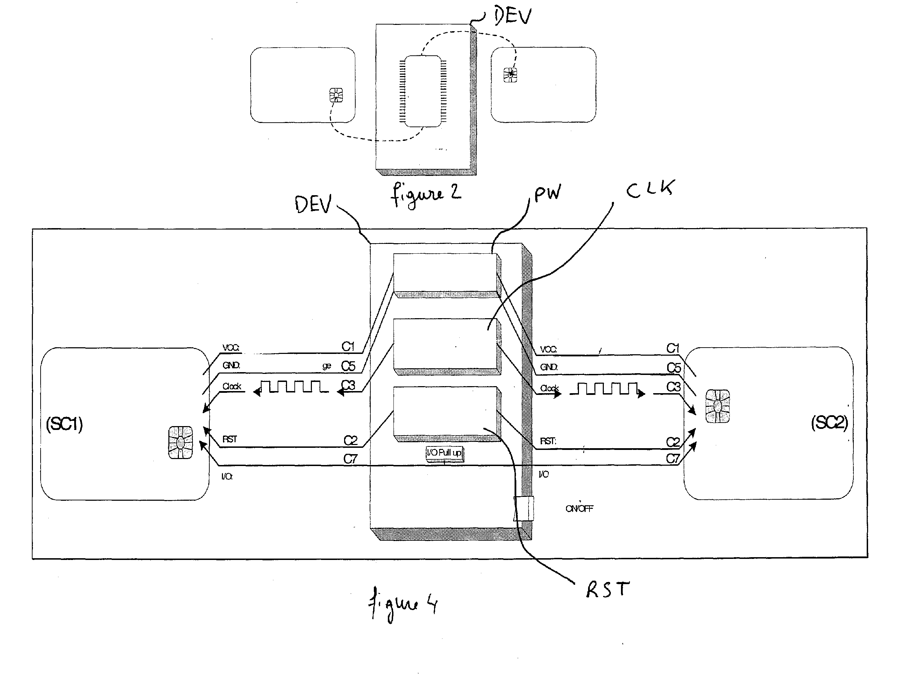

Figure 3 gives an example of such communication.

Firstly, the smart card reader resets the smart card.

Secondly, the smart card micro controller is reset and returns an answer to reset (ATR)

Thirdly, the reader analyses the smart card ATR

Fourthly, the reader sends an APDU (i.e. an order) to the smart card such as a file selection.

Fifthly, the smart Card receives the Select file order, treats it and returns the execution (Return status words)

After reception of the execution status, exchanges continue until the smart card reader has finished working with the card (reader decision).

At the end, the reader ends the communication with the smart card.

### Defining a smart card

A smart card is a monolithic silicon component embedded in a plastic card. Today, It comprises a micro controller and a software to be able to answer to a reader commands. The reader powers it, and also starts it (reset). Smart card and reader behavior are defined in ISO 7816-x standards.

### Defining a wireless compliant smart card

A wireless smart card complies with ISO 14443-x standards.

According to these standards, such a smart card has the following capabilities:
- It can be powered with a magnetic field.
- It is ready to receive orders 5 ms after having been introduced in a correct magnetic field.

Consequently, such a smart card does not need a reset signal to start, nor an external clock. The required electronic is embedded in the smart card silicon.

### Defining an ISO 7816-3 compliant smart card reader

Generally, a smart card reader is an electronic device that mainly includes two categories of elements:

### • An electronic part:

It dealing with signals such as the power (VCC), the ground (GND), the reset, the clock... All these signals are provided through the electric contact C1, C2, C3, C5, C6 and C7 (see figure 1).

### • The software:

It might be embedded in a micro controller piloting the electronic part, using several means depending on the capability of the micro controller. The more the electronic part include, the less the micro controller software has to take care.

### Exchanging data between two smart cards through a dual slot ISO 7816-x smart card reader (see figure 2)

To have data copied from a smart card to another, it is required to have a dual slot smart card reader that embeds a software to read the data from a card, and to write them to the other.

The reader should include the adequate software for copying the right data depending on the cards type, and the application. It acts as an intermediate, and should include a buffer to store temporarily the transiting data.

In order to get rid of these issues, we propose to remove the micro controller for all the smart card copying devices.

### Basic principle:

The goal of the idea is to remove the micro controller, and some other electronic parts, from such smart_card-to-smart_card inter-working device.

Instead of embedding a micro controller in the device to support the ISO 7816-x standards, the idea is to connect as directly as possible the two smart cards.

Consequently, all the intelligence is removed from the device.

In our illustrated example, when looking at the hardware level of ICC / reader interface, the following function can be isolated (c.f. ISO 7816-3):
- The power supply (i.e. VCC and Ground signals).
- The clock signal, which is the time reference use for data transmission between sender and receiver.
- The Reset signal, which is applied to the smart card to reset it.
- The VPP (useless).
- The I/O signal which is the input and the output of serial data.

In the previous list, several signals are provided by a dedicated hardware of the smart card reader:
- The power supply (Ground and VCC).
- The VPP (EPROM programming power supply which is useless).
- The clock (This is for currently existing technology, but one could imagine a smart card embedding a clock generator to provide it to the reader instead of the reverse. Many smart cards already embed an internal clock for fast arithmetic calculations.).
- The reset (The reset is a special case because wireless smart cards should generate it by themselves when powered by a magnetic field (as defined in ISO 14443-x standards). When such a card is introduced in a reader (i.e. with contacts), the reader provides the reset, but the technological gap is very short to include the self-resetting function in a non-wireless smart card.)

### A new type of smart card hardware functions?

The technological gap between current contact only smart cards (see ISO 7816-3 standard) and a new generation able to perform the following is not very important:
- An automatically starting smart card embedding its reset function engaged under certain conditions.
- A smart card embedding a clock generator, and providing the signal to the outside under certain conditions.
- A smart card embedding a reset signal generator, and providing the signal to the outside under certain conditions.

Consequently, the choice between having these functions provided by the reader or by a smart card is only cost driven.

### Idea summary:

Moving the following functions (or partially moving) from the smart card reader to the smart card in order to reduce cost:
- The ISO 7816-x communication standards required for piloting a smart card (T=0 protocol, T=1 protocol, ... , ATR analysis, generating commands, analyzing answers...).
- The smart card reset to automatically start (self reset).
- The smart card reset to start another smart card.
- The clock generation for another smart card.
- The functions to pilot a dual slot smart card device with no micro-controller in order to establish the communication with the other smart card.

Defining a dual slot smart card reader with no micro-controller on which the following functions (or some of them) are absents because they have been embedded in the smart card:
- The ISO 7816-x communication standards required for piloting a smart card (T=0 protocol, T=1 protocol, ... , ATR analysis, generating commands, analyzing answers...).
- The smart card reset function.
- The clock to provide to the smart card

Completing the very basic dual slot smart card reader with the required functions (or some of them) in order to provide the smart card with the mean to pilot the functions listed here above, and stayed in the device (i.e. not embedded in the smart card).

### Implementation example

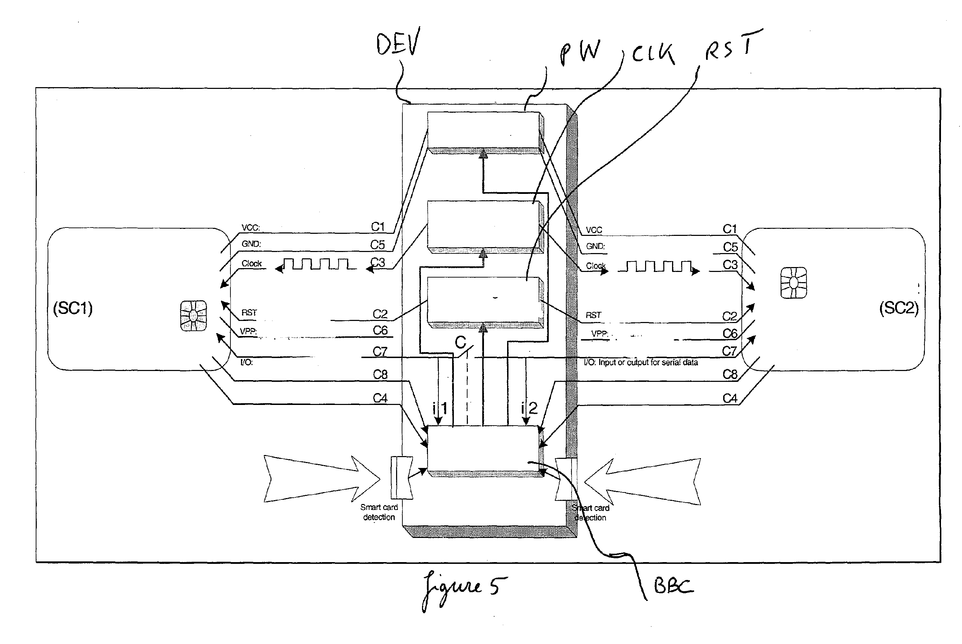

### Example 1 (see figure 4)

For this example, the smart card embedding the applet reader is a standard smart SC2 card but with a modified low level operating system.

Figure 4 represents the dual slot smart card reader includes the following building blocks:
- Power supply PW: provides the power to both smart cards through C1 & C5 electric connections.
- Clock signal generator CLK: provides the clock signal to both smart cards through C3 electric connection. The clock signal provided to both smart cards is the same. It is used by the smart cards to synchronize their exchanges. Consequently they must have the same time reference.
- Reset signal generator RST: provides the reset signal to the two smart cards, connector per connector.

From now, lets assume SC1 is a standard smart card and SC2 embeds the applet reader.
SC1 must be inserted in connector 1 and SC2 in connector 2.
SC1 and SC2 I/O are link, and the dual slot reader ensures the line pull up.

### With reference to Figure 4. Operations are:

1. The device starts when the dedicated switch button is pressed. It might be related to a cover closing, smart cards detection, ...
2. The device reset the smart card in the connector 2 first. It is SC2 that is embedding the applet reader.
3. The reader waits for an appropriate time in order to let SC2 sending the ATR on the I/O. The applet reader starts automatically.
4. The device now reset the smart card in the connector 1. It is SC1.
5. SC1 returns the ATR to SC1, having no idea that it is connected to a smart card instead as being in relation with a smart card reader.
6. As SC2 embeds the applet reader, it can behave like a standard smart card reader.
   It treats SC1 ATR and sends orders in accordance with ISO 7816-x standards.
7. From SC1 standpoint, there are no differences being under the control of the applet reader, or under the control of a standard smart card reader.

### Inverting the smart card connector for SC1 and SC2:

If SC1 is put in the connector 2, and SC2 in connector 1, SC1 is reset first. As it does not embed the applet reader, it cannot interpret the SC2 ATR. Consequently communication errors between SC1 and SC2 append.

### Other case - SC1 and SC2 both embeds the applet reader:

If SC1 also embeds the applet reader, it can interpret SC2 ATR. Thus no mater which of SC1 or SC2 interprets other's ATR. It depends on the connector on which the cards are inserted.

There should be a protocol to detect the smart card in connector 1 also embeds the applet reader, and to determine which of the two smart cards should pilot the other (i.e. act as a reader). The choice directly depends on the applets function, version...

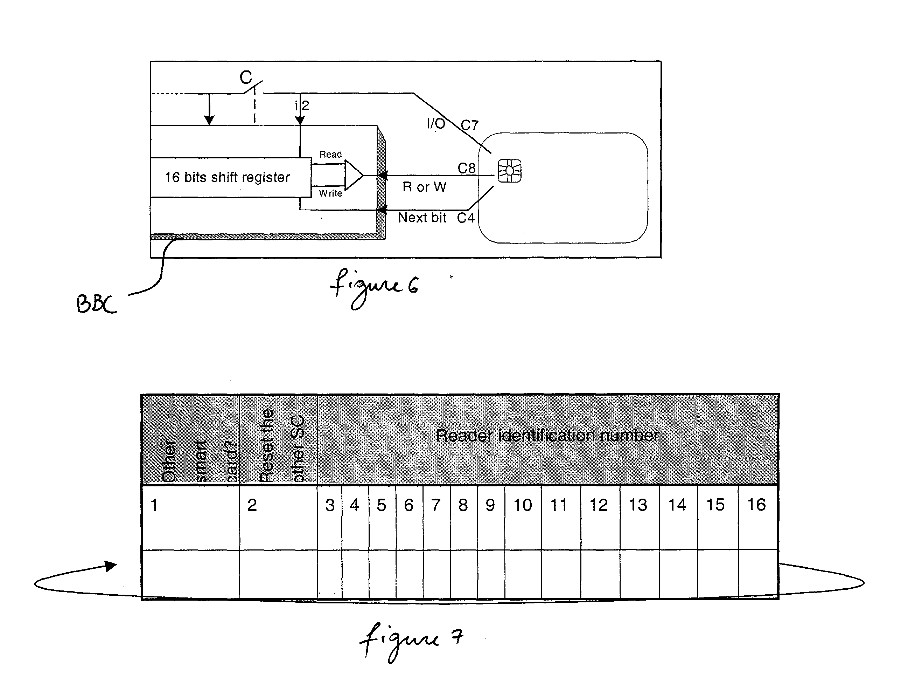

### Example 2 (see figure 5)

In the implementation, the dual slot smart card reader includes the following building blocks:
- Power supply PW: provides the power to both smart cards through C1 & C5 electric connections.
- Clock signal generator CLK: provides the clock signal to both smart cards through C3 electric connection. The clock signal provided to both smart cards is the same. It is used by the smart cards to synchronize their exchanges. Consequently they must have the same time reference.
- Reset signal generator RST: provides the reset signal to a smart card under the control of the other smart card.
- Building Blocks Controller BBC: controls all other building blocks and is able to connect or disconnect the I/O of the two smart cards. It receives order from the smart cards through the C4, C7 and C8 electric contacts that are connected to the smart cards.
The way the smart cards could address the BBC is explained later in this document.

### With reference to figure 5, Operations are:

1. Each time a smart card is inserted (SC1 or SC2), the Building Blocks Controller (BBC) performs its reset as described in ISO7816-3.
   Only one smart card is treated at a time. Consequently the second smart card introduced is not powered (thus no clock, no reset, ...).
2. If the smart card embeds the applet reader, it can address the BBC. If the smart card does not embed the applet reader, it waits for ISO order. In such a case; the reader treats the other smart card (if present) after a pre-determined timeout.
   *If is now assumed that at least one of the two smart cards embeds the applet reader. Lets assume it is SC2 to simplify the end of the example explanation.*
3. Having been reset, SC2 tries to detect an applet reader compatible reader. It addresses the reader through C4, C7 and C8, and found it.
4. SC2 polls the reader to search for a smart card on the other slot.
5. When SC1 is found, SC2 set its I/O to high state, waits for the SC1 ATR *(Answer To Reset as described in* ISO 7816-3 *standard)* data, and orders the reader to perform the following in a single command:
   a. Connect SC1 and SC2 I/O by closing the C contact.
   b. Provide power to SC1.
   c. Perform the reset of SC1 according the ISO7816-3.
6. As SC2 embeds the applet reader, it can behave like a standard smart card reader. Thus it addresses SC1 and sends its orders in accordance with ISO 7816-x standards.
   From SC1 standpoint, there are no differences being under the control of the applet reader, or under the control of a standard smart card reader.

### Addressing the Building Blocks Controller through C4, C7 and C8:

The BBC can receive the following order:
1. "Is there a card in the other reader?" that is used by the applet reader when waiting for another smart card.
2. "Connect the two I/O (SC1 & SC2) and apply reset to the other smart card". This command is used by the applet reader to begin a communication session with the other card, while behaving like a standard smart card reader.
3. To distinguish reader types, an identification number could be available.
Thus, if there are different types of "applet reader" compatible reader, the identification number will help the smart card to determine the reader capabilities.

The orders 1 and 2 could be coded on a single bit for each; and the identification number (order 3) could be coded other 14 bits, which makes 16384 possible values.

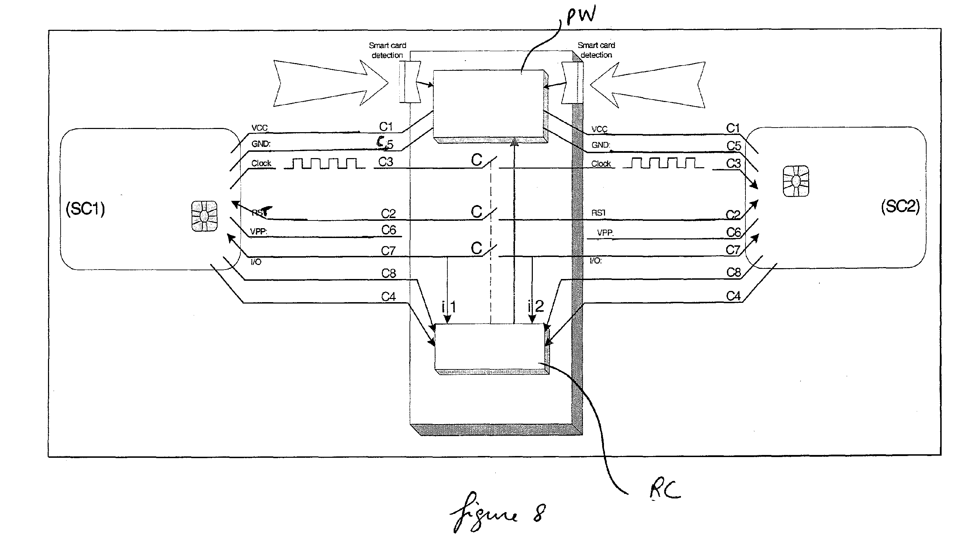

Each of these **16 bits** (1+1+14) can be controlled through a shift register as shown on figure 6.

The three basic functions required to use such a register are:
1. Move to next bit (go to bit 1 when moving from bit 16).
2. Provide bit state to smart card.
3. Get bit state from smart card.

These three functions can be programmed using 3 electric connections:
1. Each time a pulse is provided to this line C4, the shift register moves to next bit.
2. C7 is used to read or write a bit.
3. If C8 value is "1" then the bit is written by the smart card, otherwise it is read.

Figure 3 is an example of an electrical scheme for communicating with the BBC.

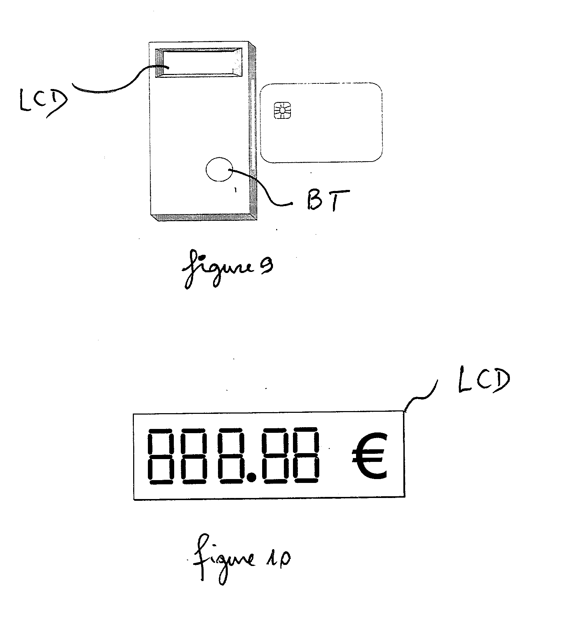

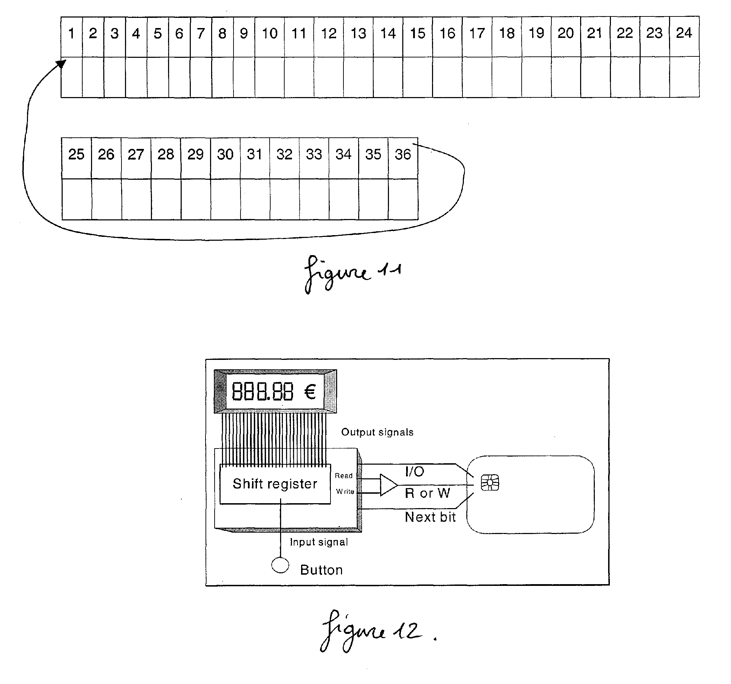

### Example 3 (see figure 8)

For this example, the smart card embedding the applet reader should be able to reset itself, to provide a clock and to manage the reset of the other smart card.

In reference to the figure 8, the dual slot smart card reader includes the following building blocks:
- Power supply PW: provides the power to both smart cards through C1 & C5 electric connections.
- Reader Controller RC: controls the power supply building block and is able to connect or disconnect the I/O, the clock and the reset signal of the two smart cards. It receives order from the smart cards through the C4, C7 and C8 electric contacts that are connected to the smart cards.
   The way the smart cards could address the Reader Controller (RC) uses the same principle as for the example 1.

With reference to figure 5, Operations are:
1. Each time a smart card is inserted (SC1 or SC2) it is powered on. The second smart card introduced stays off.
   *Lets assume the first smart card introduced is SC1 and the second smart card* *introduced is SC2. SC1 is now powered on while SC2 is not.*
2. If the SC1 embeds the applet reader, it can address the RC.
   If the smart card does not embed the applet reader, nothing appends. In such a case; the reader power on the other smart card (if present) after a pre-determined timeout.
   *It is now assumed that at least one of the two smart cards embeds the applet reader. Lets assume it is SC2 to simplify the end of the example explanation.*
3. Having been powered on, and not reset by the reader, SC2 automatically start (self reset) and tries to detect an "applet reader" compatible reader. It addresses the reader through C4, C7 and C8, and found it.
4. SC2 polls the reader to search for a smart card on the other slot.
5. When SC1 is found, SC2 set its I/O to high state, waits for the SC1 ATR data, and orders the reader to Connect SC1 and SC2 I/O by closing the C contacts.
6. The I/O, the clock and the reset signal are now connected between SC1 and SC2. SC2 reset SC1 as described in ISO 7816-3.
7. SC1 returns the ATR to SC1, having no idea that it is connected to a smart card instead as being in relation with a smart ca rd reader.
   As SC2 embeds the applet reader, it can behave like a standard smart card reader.
It treats SC1 ATR and sends orders in accordance with ISO 7816-x standards.

From SC1 standpoint, there are no differences being under the control of the applet reader, or under the control of a standard smart card reader.

### EMBODIMENT B.

The following chapter describes the example of an implementation of an E-purse consulting device.

Figure 9 is an example of an E-purse consulting device EPS.

The device is made of a screen LCD and a button BT.

The screen LCD (In this example, the LCD allows only to display an amount. Usually, such device allows also to display the last transaction performed. This requires a more complex LCD) allows displaying numbers as it appears on figure 10.

In our example, each number is made of 7 segments, there are 5 numbers, and thus there are 35 segments to control (i.e. to switch on or off). In our illustrated example, the point before the two decimals and the euro symbol are always visible (i.e. directly connected to the power).

In our example, the button BT constitutes the unique input peripheral.

Each of these 36 signals (35 outputs + 1 input) can be controlled through a shift register as represented on figure 12.

The three basic functions required to use such a register are:
1. Move to next bit (go to bit 1 when moving from bit 36).
2. Provide bit state to smart card.
3. Get bit state from smart card.

All these function can be programmed using 3 electric connections:
1. Each time a pulse is provided to this line, the shift register moves to next bit.
2. This line is used to read or write a bit.
3. If this line value is "1" then the bit is written by the smart card, otherwise it is read.

The smart card can use the I/O, C4 and C8 for these electric connections (see figure 12).

When inserted in such a device, the smart card detect (There are several means to perform the detection. For instance, the smart card can run the applet if it was not reset after a certain time) it is not in relation with a standard smart card reader, and engage automatically an applet which handles the three contacts to display the E-Purse balance, or to check the button status.

### Extension:

The shift register can be completed in order to provide some information such as the device capabilities.

It is just required to have several bits the smart card would read.

Consequently, the smart card would be able to display the information on different devices.

### Conclusion:

So, the reader do not integrate the capabilities to pilot a smart card, but a set of hardware functions the smart card does not integrate by itself and at least one of the two cards comprise a functional set of instructions. The functional set of instructions can perform the following functions:
- it causes the smart card to pilot the reader hardware functions
- it causes the smart card to understand the other smart card behavior like a standard smart card reader does it
- it is automatically executed
- it is used to pilot the reader
- it is used to pilot the other smart card

The device integrates a set of input and output peripherals. The set of instructions can perform the following functions:
- it causes the smart card to provide the user with some data it contains through on of its peripheral
- it causes the smart card to pilot the device peripheral
- it causes the smart card to detect when the user perform an action, such as pressing a button, on the device
- it causes the smart card to be able to determine the characteristics of the device
- it causes the smart card to be able to determine if it is compatible with the device

The peripherals interact with the smart card through a very limited number of electric contacts (max 3).

### Advantages:

- Removing the micro controller reduces the device cost.
- It also reduces the power requirement, thus making other costs reduction on the device batteries.
- Factorizing several applications requirements in the same display also reduce costs (E-purse 1, E-purse 2...). The software determining the data to display is embedded in the smart card itself, thus one could imagine using the same display for all E-purse applications.
The more a component is ordered, the less is the unit cost.

## Claims

1. A portable system (SC), in particular a smartcard, including a microcontroller and means (C1-C8) for communicating with a portable system-accepting device (DEV) able to receive at least one portable system, said device comprising hardware elements (VCC,GND), **characterized in that** said microcontroller stores a program for piloting, or communicating with, said device or with any other system connected to said device if said device accepts more than one portable system.

2. The portable system according to claim 1 **characterized in that**, during piloting or communicating step, all or part of the device hardware elements is used by said portable system.

3. The portable system according to claim 1 **characterized in that**, said program performs reader and/or writer functions.

4. The portable system according to claim 3, **characterized in that**, when two portable systems are connected to the device, said program stored in said first portable system performs a read onto a second portable system, and a write of said read content inside its memory, or inversely.

5. The portable system according to claim 1 **characterized in that** said device is without microcontroller.

6. The portable system according to claim 1 **characterized in that** said program causes the portable system to detect an external action, such as pressing a button on said device, indicating a need to execute said program.

7. The portable system according to claim 1 **characterized in that** the device stores a reference indicating its type, and **in that** this reference is used by said portable system for determining a program among a plurality of communicating/piloting programs stored in said portable system.

8. The portable system according to claim 1 **characterized in that** the device includes peripherals, and **in that** said program pilots said peripherals for processing the program stored inside the portable system.

9. The portable system according to claim 1 **characterized in that**, when two portable systems are connected to the device, a first portable system including said program, said first portable system pilots, or communicates with, the second portable system without software intervention in said device.

10. The portable system of claim 10 **characterized in that**, if two portable systems are connected to said device, for initialization step, the first portable system sends an ATR (Answer To Reset) to the second portable system, and receives the corresponding response from said second portable system.

11. The portable system according to claim 10 **characterized in that**, said program handles script interacting with the second portable system.

12. The portable system according to claim 10 **characterized in that** the device stores an information indicating to said first portable system whether a second portable system is connected to the device.

13. A portable system-accepting device comprising hardware elements (VPP,VCC,GND,RST) and able to receive at least one portable system including a microcontroller, **characterized in that** hardware elements are piloted by a program stored inside the portable system.
